# EUROPÄISCHE PATENTSCHRIFT

(11) **EP 3 371 563 B1**
(45) Veröffentlichungstag und Bekanntmachung des Hinweises auf die Patenterteilung: **01.01.2020**
(21) Anmeldenummer: 16782243.6
(22) Anmeldetag: 18.10.2016
(51) Int. Cl.: G01K 7/16

(54) **SENSORELEMENT UND VERFAHREN ZUR HERSTELLUNG EINES SENSORELEMENTS**
SENSOR ELEMENT AND METHOD FOR PRODUCING A SENSOR ELEMENT
ÉLÉMENT CAPTEUR ET PROCÉDÉ DE FABRICATION D'UN ÉLÉMENT CAPTEUR

(30) Priorität: 02.11.2015 DE 102015118720; 25.01.2016 DE 102016101249
(43) Veröffentlichungstag der Anmeldung: 12.09.2018
(73) Patentinhaber: TDK Electronics AG, 81671 München (DE)
(72) Erfinder: IHLE, Jan, 8071 Grambach (AT); WEIDENFELDER, Anke, 272-0023 Ichikawa-shi CHIBA-KEN (JP); MEAD, Christl Lisa, 8543 St. Martin i.S. (AT); KLOIBER, Gerald, 8073 Feldkirchen (AT)
(74) Vertreter: Epping - Hermann - Fischer
(86) Internationale Anmeldenummer: PCT/EP2016/074944
(87) Internationale Veröffentlichungsnummer: WO 2017/076632

(56) Entgegenhaltungen:
- EP-A2- 1 417 483
- DE-A1- 3 634 132

## Beschreibung

Es wird ein Sensorelement angegeben. Das Sensorelement kann insbesondere zur Messung einer Temperatur dienen. Beispielsweise handelt es sich um ein NTC-Sensorelement (negative temperature coefficient), also um einen Heißleiter.

Ferner wird ein Verfahren zur Herstellung eines Sensorelements angegeben.

Nach dem Stand der Technik werden Temperaturen für die Überwachung und Regelung in unterschiedlichsten Anwendungen vorwiegend mit keramischen Heißleiter-Thermistorelementen (NTC), Silizium-Temperatursensoren (KTY), Platin-Temperatursensoren (PRTD) oder Thermoelementen (TC) gemessen. Dabei sind auf Grund der geringen Herstellungskosten die NTC-Thermistoren am weitesten verbreitet. Ein weiterer Vorteil gegenüber Thermoelementen und metallischen Widerstandselementen, wie z.B. Pt-Elementen, besteht in der ausgeprägten negativen Widerstands-Temperatur-Charakteristik.
Beispiele sind in DE 36 34 132 A1 und EP 1 417 483 A2 zu finden.

Für den Einsatz in Leistungsmodulen werden vorwiegend SMD NTC-Temperatursensoren verwendet, die aufgelötet werden. Bei Steuermodulen für geringe Leistungen werden alternativ dazu auch NTC-Chips eingesetzt, die an der Unterseite mittels Ag-Sinterpaste, Löten oder Kleben montiert sind und deren Oberseite über einen Bonddraht kontaktiert wird.

Für eine elektrische Kontaktierung der NTC-Keramik müssen metallische Elektroden aufgebracht werden. Nach dem Stand der Technik werden dazu Dickschichtelektroden vorwiegend aus Silber- oder Gold-Pasten über einen Siebdruckprozess mit anschließendem Einbrand aufgebracht.

Die Silber-Metallisierungen eignen sich besonders für Lötverbindungen. Aufgrund der steigenden technologischen Anforderungen hinsichtlich neuer zuverlässiger Anschlußkontaktierungen wie Bonden und Schweißen, ist speziell beim Bonden mit Gold- oder Aluminium- bzw. Kupferdrähten eine andere Elektrode notwendig, da eine Anbindung an Silber keine ausreichende Zuverlässigkeit aufweist.

Im Falle von Gold-Metallisierungen können Lötverbindungen zu Anschlussdrähten nicht realisiert werden. Bondverbindungen werden aus Kostengründen nur mit Gold-Dünndraht realisiert. Aluminium-Bonddrahtverbindungen auf Gold-Elektroden erreichen nicht die Zuverlässigkeitsanforderungen.

Aufgrund der steigenden Anforderungen bezüglich Einsatztemperatur und Zuverlässigkeit besteht ferner die Forderung nach NTC-Temperatursensoren, die eine hohe Langzeitstabilität aufweisen sowie für größere Bereiche der Einsatztemperaturen geeignet sind oder für verschiedene Einsatztemperaturen angewendet werden können.

Eine zu lösende Aufgabe besteht darin, ein Sensorelement anzugeben, welches verbesserte Eigenschaften aufweist.

Diese Aufgabe wird durch ein Sensorelement gemäß der unabhängigen Ansprüche gelöst.

Gemäß einem Aspekt wird ein Sensorelement zur Temperaturmessung angegeben. Das Sensorelement weist vorzugsweise ein keramisches Sensormaterial auf. Das Sensorelement ist vorzugsweise ein NTC-Sensorchip. Das Sensormaterial ist vorzugsweise in Form wenigstens einer NTC-Schicht ausgebildet. Das Sensorelement weist einen keramischen Träger auf. Das Sensorelement weist ferner wenigstens eine Elektrode auf. Vorzugsweise weist das Sensorelement zwei oder mehr Elektroden auf.

Der Träger weist eine Oberseite und eine Unterseite auf. Auf der Oberseite und auf der Unterseite des Trägers ist jeweils Sensormaterial, beispielsweise in Form einer NTC-Schicht, angeordnet. Vorzugsweise ist das Sensorelement ein Doppel-NTC-Dickschichtsensor. Vorzugsweise sind die Oberseite und die Unterseite mit dem Sensormaterial bedruckt. Die Oberseite und die Unterseite des Trägers kann jeweils vollflächig oder auch nur partiell mit dem Sensormaterial bedruckt sein. Die Bedruckungsgeometrie kann sich unterscheiden. Mit anderen Worten, die Oberseite kann eine andere Bedruckungsgeometrie mit Sensormaterial aufweisen als die Unterseite. Die NTC-Schichten können beispielsweise individuell angesteuert werden und/oder unterschiedliche R-T-Kennlinien aufweisen. Ein Widerstand der jeweiligen NTC-Schicht wird vorzugsweise durch eine Dicke und/oder Geometrie der jeweiligen NTC-Schicht bestimmt.

Durch das entsprechende Design wird ein kostengünstiger NTC-Temperatursensor bereitgestellt, der gleichzeitig zwei Kennlinien aufweist und somit bei entsprechend angepassten R-T-Kennlinien die Temperaturgenauigkeit im Messbereich erweitert. Ferner kann durch die Realisierung von zwei Kennlinien in einem einzigen Bauteil Platz bei der Montage gespart werden.

Gemäß einem Ausführungsbeispiel ist auf jede der NTC-Schichten wenigstens eine Elektrode aufgebracht. Beispielsweise sind auf jede der NTC-Schichten wenigstens zwei Elektroden aufgebracht. Die Elektroden sind durch einen Freibereich voneinander getrennt. Beispielsweise ist der Freibereich in Form eines Steges ausgebildet. Die Elektroden sind durch den Steg voneinander getrennt. Der Freibereich ist frei von Elektrodenmaterial bzw. kann mit einer Schutzschicht gefüllt sein.

Auf einer Seite nebeneinander angeordnete Elektroden haben den Vorteil, dass eine Kontaktierung von nur einer Seite möglich ist. Beispielsweise kann die Kontaktierung auf der Leiterplatte einseitig durch Kleben, Löten oder Ag-Sintern erfolgen. Auf der Oberseite ist durch nebeneinander angeordnete Elektroden ebenfalls eine einseitige Kontaktierung durch z.B. Schweißen, Bonden oder Löten von Anschlussdrähten möglich.

Gemäß einem Ausführungsbeispiel kann direkt auf dem keramischen Träger, vorzugsweise auf der Oberseite des Trägers, eine erste Elektrode aufgebracht sein. Auf wenigstens einem Teilbereich dieser ersten Elektrode ist eine NTC-Schicht aufgebracht. Auf der NTC-Schicht befindet sich eine weitere oder zweite Elektrodenschicht bzw. Elektrode. Die weitere oder zweite Elektrode bedeckt die NTC-Schicht vorzugsweise vollständig.

Auf - beispielsweise - der Unterseite des Trägers ist eine weitere NTC-Schicht angeordnet. Auf dieser NTC-Schicht ist wenigstens eine Elektrode aufgebracht. Beispielsweise sind auf der NTC-Schicht wenigstens zwei Elektroden aufgebracht. Die Elektroden sind durch einen Freibereich voneinander getrennt. Der Freibereich ist frei von Elektrodenmaterial bzw. kann mit einer Schutzschicht gefüllt sein.

Auf der Unterseite nebeneinander angeordnete Elektroden haben den Vorteil, dass eine Kontaktierung von nur einer Seite möglich ist. Beispielsweise kann dadurch die Kontaktierung auf der Leiterplatte einseitig durch Kleben, Löten oder Ag-Sintern erfolgen. Auf der Oberseite ist durch die schichtartige Anordnung von erster Elektrode, NTC-Schicht und weiterer Elektrode ein wesentlich größerer Querschnitt des Sensormaterials nutzbar, was geringere Widerstände ermöglicht.

Gemäß einem Ausführungsbeispiel weist die jeweilige Elektrode wenigstens eine gesputterte Schicht auf. Die Elektroden sind beispielsweise Dünnschichtelektroden. Die gesputterte Schicht ist vorzugsweise direkt auf die jeweilige NTC-Schicht aufgebracht. Die wenigstens eine gesputterte Schicht weist vorzugsweise Nickel auf. Die wenigstens eine gesputterte Schicht kann ferner Anteile von Vanadium aufweisen. In einer weiteren Ausführungsform weist die Elektrode zwei Schichten auf, wobei eine erste oder untere Schicht Chrom oder Titan aufweist und eine zweite oder obere Schicht Nickel aufweist und ebenfalls Anteile von Vanadium aufweisen kann. Vorteilhafterweise wird für die beschriebene Ausführungsform eine Deckschicht auf die Nickelschicht aufgebracht. Diese Deckschicht besteht aus einem oxidationshemmenden Metall wie z. B. Silber oder Gold.

Gemäß einem Ausführungsbeispiel weist die jeweilige Elektrode wenigstens eine aufgedruckte Schicht auf. Die Elektroden sind beispielsweise Dickschichtelektroden. Die aufgedruckte Schicht ist vorzugsweise direkt auf die jeweilige NTC-Schicht aufgedruckt. Durch den Druckvorgang können dickere Elektrodenschichten realisiert werden.

Im Fall von sehr eng tolerierten Widerständen kann ein so genannter Trimmprozess zu Einstellung des Widerstands bei Nenntemperatur erfolgen. Dabei wird durch partiellen Laserabtrag ein Teilbereich, beispielsweise einer oder beider NTC-Schichten entfernt, so dass eine Aussparung entsteht. Durch den Trimmprozess wird die Geometrie der NTC-Schicht geändert und der Widerstand entsprechend eines Vorgabewertes angepasst.

Gemäß einem Aspekt wird ein Verfahren zur Herstellung eines Sensorelements beschrieben. Vorzugsweise wird durch das Verfahren das oben beschriebene Sensorelement hergestellt. Alle Eigenschaften, die in Bezug auf das Sensorelement oder das Verfahren offenbart sind, sind auch entsprechend in Bezug auf die jeweiligen anderen Aspekte offenbart und umgekehrt, auch wenn die jeweilige Eigenschaft nicht explizit im Kontext des jeweiligen Aspekts erwähnt wird.

Das Verfahren weist die folgenden Schritte auf:
- Herstellung von NTC-Pulver zur Ausbildung wenigstens einer NTC-Schicht. Das NTC-Pulver besteht auf Basis von Perowskiten im System Y-Ca-Cr-Al-O mit diversen Dotierungen oder Spinellen im System Ni-Co-Mn-O mit diversen Dotierungen.
- Bereitstellung eines keramischen Trägermaterials. Als Trägermaterial dient ein keramisches Substrat auf Basis von z.B. Al₂O₃, ZrO₂, ATZ- bzw. ZTA-Materialien oder MgO.
- Bedrucken einer ersten Oberfläche des Trägermaterials mit NTC-Paste in einer ersten Bedruckungsgeometrie. Das Bedrucken der ersten Oberfläche, beispielsweise der Unterseite, erfolgt
   in einem Bedruckungsvorgang oder in mehreren Bedruckungsvorgängen. Beispielsweise werden zwei, drei, fünf
   oder zehn Bedruckungsvorgänge durchgeführt. Die erste Oberfläche kann partiell oder teilweise mit NTC-Paste bedruckt werden. Die NTC-Paste kann in einer vorbestimmten Dicke (Dicke der späteren NTC-Schicht) auf die erste Oberfläche gedruckt werden.
- Sintern des Systems aus Trägermaterial und NTC-Schicht.
- Bedrucken einer zweiten Oberfläche des Trägermaterials mit NTC-Paste in einer zweiten Bedruckungsgeometrie. Das Bedrucken der zweiten Oberfläche, beispielsweise der Oberseite, erfolgt in einem Bedruckungsvorgang oder in mehreren Bedruckungsvorgängen. Beispielsweise werden zwei, drei, fünf oder zehn Bedruckungsvorgänge durchgeführt. Die zweite Oberfläche kann partiell oder teilweise mit NTC-Paste bedruckt werden. Die zweite Bedruckungsgeometrie kann identisch zur ersten Bedruckungsgeometrie sein. Alternativ können sich die erste und die zweite Bedruckungsgeometrie auch voneinander unterscheiden. Beispielsweise kann die zweite NTC-Schicht so aufgedruckt sein, dass auf der zweiten Oberfläche ein Freirand verbleibt. Die NTC-Paste kann in einer vorbestimmten Dicke (Dicke der späteren NTC-Schicht) auf die zweite Oberfläche gedruckt werden. Die Dicken von erster und zweiter NTC-Schicht können sich unterscheiden. Beispielsweise kann die erste NTC-Schicht eine größere Dicke aufweisen als die zweite NTC-Schicht oder umgekehrt.

Alternativ dazu können die Dicken der NTC-Schichten auch identisch sein. Zusätzlich kann diese NTC-Schicht, die auf der zweiten Oberfläche aufgebracht ist, die gleiche keramische oder eine andere keramische Zusammensetzung aufweisen als die NTC-Schicht, die auf der ersten Oberfläche aufgebracht ist. Dadurch lassen sich gleiche oder unterschiedliche elektrische Eigenschaften einstellen.
- Sintern des Systems.

Alternativ dazu kann vor dem ersten Sintern auch zuerst die zweite Oberfläche des Trägermaterials mit NTC-Paste bedruckt werden. In diesem Fall kann ein gemeinsamer Sinterprozess durchgeführt werden.

In einem weiteren Schritt kann ein partieller Abtrag von zumindest einer NTC-Schicht mittels Laserschneiden, Schleifen oder Einsägen so erfolgen, dass durch die Geometrieveränderung der Widerstand angepasst wird. Es können auch beispielsweise von beiden NTC-Schichten partielle Bereiche entfernt werden.

Gemäß einem Aspekt wird ein Sensorelement zur Temperaturmessung angegeben, aufweisend
- einen keramischen Träger,
- wenigstens eine Elektrode,
wobei der Träger eine Oberseite und eine Unterseite aufweist, wobei auf der Oberseite und auf der Unterseite des Trägers jeweils eine NTC-Schicht angeordnet ist, und wobei ein Widerstand der jeweiligen NTC-Schicht durch eine Dicke und/oder Geometrie der jeweiligen NTC-Schicht bestimmt wird. Alternativ oder zusätzlich kann der Widerstand durch die Wahl der Keramikzusammensetzung bestimmt werden.

Das Sensorelement wird im Folgenden anhand von Ausführungsbeispielen und den dazugehörigen Figuren näher erläutert.

Die nachfolgend beschriebenen Zeichnungen sind nicht als maßstabsgetreu aufzufassen. Vielmehr können zur besseren Darstellung einzelne Dimensionen vergrößert, verkleinert oder auch verzerrt dargestellt sein.

Elemente, die einander gleichen oder die die gleiche Funktion übernehmen, sind mit gleichen Bezugszeichen bezeichnet.
- Figur 1: zeigt ein Sensorelement in einer ersten Ausführungsform,
- Figur 2: zeigt das Sensorelement in einer weiteren Ausführungsform,
- Figur 3: zeigt das Sensorelement in einer weiteren Ausführungsform,
- Figur 4: zeigt das Sensorelement in einer weiteren Ausführungsform.

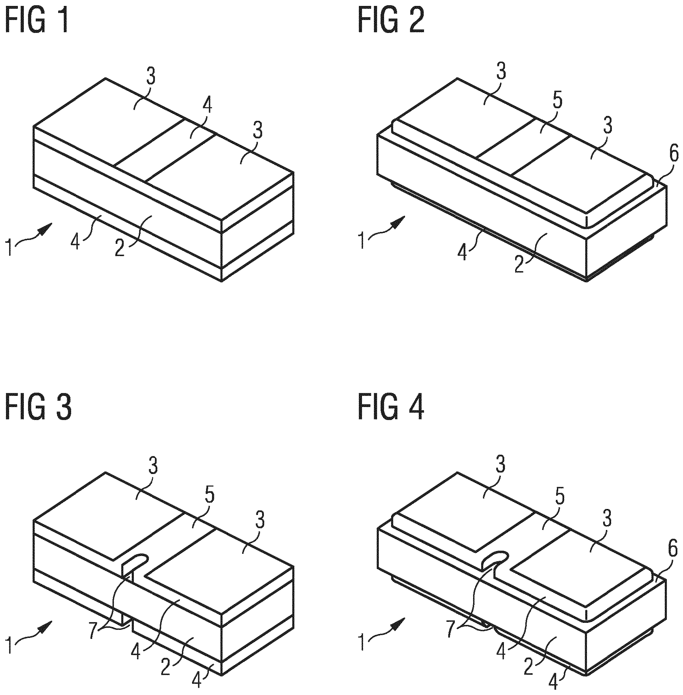

Die Figur 1 zeigt ein Sensorelement 1, insbesondere einen Sensorchip. Das Sensorelement 1 ist vorzugsweise zur Messung einer Temperatur ausgebildet. Das Sensorelement 1 weist ein keramisches Sensormaterial (NTC-Schicht 4) auf. Insbesondere ist das Sensormaterial eine NTC Keramik. Beispielsweise weist die Keramik eine Perowskitstruktur auf. Insbesondere kann die Keramik auf dem System Y-Ca-Cr-Al-O mit diversen Dotierungen beruhen. Ein derartiges Sensorelement 1 eignet sich besonders für Hochtemperaturanwendungen. Alternativ kann das Sensorelement 1, insbesondere bei geringeren Anwendungstemperaturen, eine Keramik mit einer Spinellstruktur aufweisen. Beispielsweise kann die Keramik auf dem System Ni-Co-Mn-O mit diversen Dotierungen beruhen.

Aufgrund der R-T-Kennlinie eines NTC-Temperatursensors nach dem Stand der Technik ist es nicht möglich über einen weiten Temperaturbereich mit gleichbleibend hoher Genauigkeit zu messen. Ausgehend von der Nenntemperatur des Widerstandes erhöht sich dessen Toleranz. Daher ist die Genauigkeit der Temperaturerfassung bei sehr hohen oder niedrigen Temperaturen, weit entfernt von der Nenntemperatur des Widerstandes, wesentlich geringer. Es kann nun im Falle einer eng eingrenzbaren Einsatztemperatur die Spezifikation so angepasst werden, dass die Nenntemperatur nahe der Einsatztemperatur liegt und somit dafür eine genaue Messung ermöglicht wird. Ist aber ein weiter Temperaturbereich mit hoher Genauigkeit zu erfassen, müssen dazu zwei oder mehr NTC-Temperatursensoren mit unterschiedlichen Kennlinien oder Nenntemperaturen eingesetzt werden. Dies führt oftmals zu Platzproblemen bei der Montage auf dem DCB Board bzw. der Platine.

Die Figur 1 zeigt daher ein Sensorelement 1 bei dem zwei Kennlinien in einem Bauteil realisiert sind. Das Sensorelement 1 weist das oben beschriebene Sensormaterial auf. Das Sensormaterial ist eine NTC-Schicht 4 bzw. ist in Form wenigstens einer NTC-Schicht 4 verbaut. Das Sensorelement 1 weist ferner einen keramischen Träger 2 auf. Als Träger 2 dient ein keramisches Substrat auf Basis von z.B. Al₂O₃, ZrO₂, ATZ- bzw. ZTA-Materialien oder MgO. Die NTC-Pasten basieren, wie oben beschrieben, entweder auf Perowskiten im System Y-Ca-Cr-Al-O mit diversen Dotierungen oder den Spinellen im System Ni-Co-Mn-0 mit diversen Dotierungen.

Der Träger 2 ist beidseitig mit einer NTC-Schicht 4 bedruckt. Insbesondere ist eine erste Außenfläche oder Oberfläche (z.B. eine Oberseite) des Trägers 2 mit einer ersten NTC-Schicht 4 bedruckt. Eine zweite Außenfläche oder Oberfläche des Trägers 2 (z.B. eine Unterseite) ist mit einer zweiten NTC-Schicht 4 bedruckt. Das Sensorelement 1 ist folglich ein Doppel-NTC-Dickschichtsensor.

Die NTC-Schichten 4 bedecken die Oberseite und die Unterseite des Trägers 2 jeweils vollständig. Auf die NTC-Schichten 4 werden nach einem Sinterprozess Elektroden 3 angebracht. Die Elektroden 3 werden auf die NTC-Schichten 4 mittels Dick- oder Dünnschichttechnologie aufgebracht, wie später im Detail beschrieben wird.

Im Falle von sehr eng tolerierten Widerständen kann ferner ein so genannter Trimmprozess zur Einstellung des Widerstandes bei Nenntemperatur durch partiellen Laserabtrag erfolgen, wie im Zusammenhang mit den Figuren 3 und 4 noch weiter ausgeführt wird.

Die Kontaktierung des Sensors zum DCB Board oder der Platine kann mittels Ag-Sintern, Löten oder Kleben erfolgen. Auf der Oberseite können Drähte durch Löten, Bonden oder Schweißen montiert werden.

Die Figur 2 zeigt einen Doppel-NTC-Dickschichtsensor 1 mit einem Freirand 6. Im Unterschied zu dem in Figur 1 gezeigten Sensorelement 1 ist bei dem Sensorelement 1 aus Figur 2 ein umlaufender Randbereich des Trägers 2 frei von Sensormaterial bzw. frei von der NTC-Schicht 4. Insbesondere bedecken die NTC-Schichten 4 die Oberseite bzw. die Unterseite des Trägers 2 nicht vollständig. Vielmehr ist ein umlaufender Randbereich des Trägers 2 erkennbar, welcher nicht von Sensormaterial bedeckt ist. In diesem Ausführungsbeispiel ist der Freirand 6 auf der Oberseite und der Unterseite des Trägers 2 ausgeführt.

Der Freirand 6 kann folglich auf beiden Seiten des Trägers 2 vorhanden sein. Alternativ dazu kann der Freirand 6 auch nur auf einer Seite des Trägers 2 vorhanden sein. Mit anderen Worten, die NTC-Schichten 4 können eine unterschiedliche Bedruckungsgeometrie aufweisen. Beispielsweise kann eine erste NTC-Schicht 4 eine erste Außenfläche oder Oberfläche des Trägers (beispielsweise die Oberseite des Trägers 2) vollständig bedecken. Eine zweite NTC-Schicht 4 kann eine zweite Außenfläche oder Oberfläche des Trägers 2 (beispielsweise die Unterseite des Trägers 2) nur teilweise bedecken, so dass vorzugsweise ein Randbereich des Trägers 2 frei von der NTC-Schicht 4 ist. Dadurch können unterschiedliche Widerstandswerte für die NTC-Schichten 4 erreicht werden. Auch die Dicke der NTC-Schichten 4 kann sich unterscheiden. Durch unterschiedliche Dicken der NTC-Schichten 4 können unterschiedliche Widerstandwerte für die NTC-Schichten 4 erreicht werden.

Die Figur 3 zeigt einen getrimmten Doppel-NTC-Dickschichtsensor 1.

Das Trimmen dient zur Einstellung des Widerstandes bei Nenntemperatur durch partiellen Laserabtrag. Die Trimmung erfolgte in diesem Ausführungsbeispiel dabei sowohl auf einer Oberseite als auch auf einer Unterseite des Sensorelements 1.

Die NTC-Schichten 4 weisen dabei jeweils eine Aussparung 7 auf. Die Aussparung 7 ist in einem Zwischenbereich zwischen den Elektroden 3 angeordnet. Dies führt zu einer veränderten Geometrie der jeweiligen NTC-Schicht 4, wodurch der Widerstand der jeweiligen NTC-Schicht 4 eingestellt wird. Ansonsten entspricht der Aufbau des Sensorelements 1 aus Figur 3 im Wesentlichem dem Aufbau des Sensorelements 1 aus Figur 1.

In einem alternativen Ausführungsbeispiel nicht (explizit dargestellt), kann auch nur eine der beiden NTC-Schichten 4 getrimmt werden. In diesem Fall weist nur eine NTC-Schicht 4 eine Aussparung 7 auf. Alternativ dazu, können die NTC-Schichten 4 unterschiedlich getrimmt werden. In diesem Fall weisen die NTC-Schichten 4 unterschiedlich große Aussparungen 7 auf.

Die Figur 4 zeigt einen getrimmten Doppel-NTC-Dickschichtsensor mit Freirand 6. Wie bei dem Sensorelement 1 aus Figur 3 ist hierbei ein partieller Abtrag durch Lasern erfolgt (Aussparung 7). Die Aussparung 7 findet sich an beiden NTC-Schichten 4. Die Aussparung 7 kann aber auch - wie in Zusammenhang mit Figur 3 erläutert - nur bei einer NTC-Schicht 4 ausgeführt sein oder die NTC-Schichten 4 können unterschiedlich große Aussparungen aufweisen.

Ferner ist ein umlaufender Randbereich des Trägers 2 erkennbar, welcher nicht von Sensormaterial (NTC-Schicht 4) bedeckt ist. Der Freirand 6 ist auf der Oberseite und der Unterseite des Trägers 2 angeordnet. Alternativ dazu kann der Freirand 6 auch nur an einer Außenfläche bzw. Oberfläche des Trägers 2 ausgebildet sein, beispielsweise an der Oberseite oder an der Unterseite. Alternativ dazu muss der Freirand 6 auch nicht umlaufend ausgebildet sein, sondern kann nur partiell ausgeführt sein.

Zusammengefasst ist das Sensorelement gemäß den Figuren 1 bis 4 wie folgt aufgebaut:
Zuerst erfolgt ein beidseitiges Bedrucken des Trägermaterials mit NTC-Paste. Die Bedruckung kann vollflächig oder partiell erfolgen. Dabei müssen die beiden NTC-Dickschichten 4 des Sensors nicht die gleiche Bedruckungsgeometrie aufweisen. Die NTC-Dickschichten 4 können entweder die gleichen oder unterschiedliche Kennlinien aufweisen und individuell angesteuert werden, um einen größeren Einsatzbereich und unterschiedliche Anwendungen abzudecken. Der Widerstand der NTC-Schichten 4 kann individuell durch die jeweilige Dicke der NTC-Schicht 4 und deren Geometrie eingestellt werden.

Bei der Aufbringung der Elektroden 3 kann zwischen Dünn- und Dickschichttechnologie unterschieden werden. Die Herstellung von Dünnschichtelektroden kann durch Sputtern oder Aufdampfen erfolgen. Dabei besteht die Basiselektrode in einer ersten Ausführung aus einer Nickelschicht, die Anteile von Vanadium aufweisen kann oder in einer zweiten Ausführungsform aus zwei Schichten, wobei die untere Schicht Chrom oder Titan aufweist und die zweite Schicht aus Nickel besteht, die ebenfalls Anteile von Vanadium aufweisen kann. Die Basiselektrode kann durch eine Deckschicht bestehend aus einem oxidationshemmenden Metall wie z. B. Silber, Gold, Kupfer, Aluminium etc. geschützt werden. Diese Deckelektrode kann entweder zum reinen Korrosionsschutz (Oxidation) der Nickel-Basiselektrode dienen oder auch für die Kontaktierung vorteilhaft bzw. sogar notwendig sein. Im Falle einer Anbindung mittels Ag-Sintern mit feindispersen Silberpasten ist zum Beispiel eine Silber-Deckelektrode von Vorteil. Für eine migrationsbeständige, Silber- und bleifreie Anbindung kann eine Gold-Deckschicht aufgebracht werden.

Die Dicke der Basiselektrode beträgt in Abhängigkeit vom späteren Kontaktierverfahren mittels Ag-Sintern oder Löten weniger als 10 µm, vorteilhafterweise weniger als 3 µm, idealerweise weniger als 0,5 µm. Die Dicke der Deckelelektrode kann bis zu 1 µm, in Ausnahmefallen bis zu 20 µm betragen.

Die Herstellung von Dickschichtelektroden kann durch ein Siebdruckprozess mit anschließendem Einbrand erfolgen. Die eingesetzten Pasten können Ag bzw. Au oder etwaige Beimischungen enthalten.

Das Design der Elektroden 3 kann gemäß drei verschiedener Varianten erfolgen:
Gemäß einer ersten Variante, werden auf der NTC-Dickschicht 4 zwei Elektrodenpads aufgebracht, die durch einen Freibereich 5 räumlich voneinander getrennt sind. Dies kann auf beiden NTC-Dickschichten 4 erfolgen.

Variante 2: Die Metallisierung der unteren NTC-Dickschicht 4 erfolgt wie in Variante 1 beschrieben mit zwei voneinander getrennten Elektrodenpads. Auf der Oberseite wird die Elektrode vollflächig auf das Trägermaterial aufgebracht. Anschließend wird diese mit NTC-Paste vollflächig oder partiell bedruckt, die wiederum mit einer Elektrode versehen wird. Der Sinterprozess kann für alle drei Lagen gemeinsam erfolgen oder mit Zwischeneinbränden der einzelnen Lagen. Die Kontaktierung der oberen NTC-Dickschicht 4 kann z. B. durch Löten, Bonden oder Schweißen von Drähten bewerkstelligt werden. Die vollflächig auf der Oberseite des keramischen Trägers 2 aufgebrachte Elektrode 3 muss ein elektrisch leitendes Material oder einen elektrisch leitenden Materialverbund aufweisen, das bzw. der zur gemeinsamen Sinterung bei Temperaturen bis 1400 °C der darauf befindlichen NTC-Schicht 4 geeignet ist. Üblicherweise handelt es sich dabei um Pd oder Pt haltige Ag-Pasten.

Zur Widerstandseinstellung werden die metallisierten Substrate elektrisch vorgemessen. Anhand der Vormessdaten wird die Geometrie des Doppel-NTC-Dickschichtsensors definiert. Da die Länge fixiert ist, bleibt als variable Größe die Breite als Einstellparameter. Für besonders eng tolerierte Widerstände bei Nenntemperatur kann mit einem zusätzlichen Trimmprozess der Widerstand der einzelnen Bauelemente eingestellt werden. Dabei wird Keramikmaterial oder Elektrodenmaterial durch z.B. Laserschneiden, Schleifen, Einsägen partiell so entfernt, dass durch die Geometrieveränderung der Widerstand angepasst wird.

Um die Langzeitstabilität der Keramik zu verbessern, kann über den unmetallisierten Bereich eine dünne nicht leitende Schutzschicht aufgebracht werden, die z.B. aus Keramiken, Gläsern, Kunststoffen oder Metalloxiden besteht. Diese kann durch Sputtern, Aufdampfen, Lithographie oder Aufdrucken und Einbrennen erzielt werden.

Für den Einsatz auf Platinen können die drei Varianten des Sensors auf die Leiterbahnen geklebt, gelötet oder gesintert werden. Der Ag-Sinterprozess kann unter Druck oder drucklos erfolgen. Mittels Löten, Schweißen oder Bonden kann die Oberseite des Sensors mit Drähten kontaktiert werden.

Durch das neue Design eines Sensorelements 1 gemäß den Figuren 1 bis 4 werden zwei Kennlinien in einem Bauteil realisiert. Dadurch kann Platz bei der Montage auf dem DCB Board bzw. der Platine eingespart werden. Die mechanische Stabilität des Sensorelementes 1 wird durch die Verwendung von keramischen Trägermaterialien auf Basis von z. B. Al₂O₃, ZrO₂, ATZ- bzw. ZTA-Materialien oder MgO erhöht.

Der Herstellungsprozess eines erfindungsgemäßen Doppel-NTC-Dickschichtsensors wird im Folgenden beispielhaft näher ausgeführt:
In einem ersten Schritt wird NTC-Pulver hergestellt. Darunter sind Einwaage, Naß-Vormahlung, Trocknung, Siebung, Kalzination, Naß-Nachmahlung, Trocknung, und wiederum Siebung erfasst. Es folgt das Einwiegen des NTC-Pulvers für die Pastenherstellung. Ferner erfolgt ein Einwiegen organischer Komponenten für die Paste.

In einem weiteren Schritt werden die Pastenkomponenten durch Rühren vorhomogenisiert. Anschließend werden die Pastenkomponenten mit einem 3-Walzenstuhl homogenisiert.

In einem anschließenden Schritt erfolgt das einseitige Bedrucken von keramischen Trägermaterial mit NTC-Paste mittels Siebdruck. Beispielsweise wird in diesem Schritt die Unterseite des Trägermaterials mit NTC-Paste bedruckt. Alternativ dazu kann auch die Oberseite mit NTC-Paste bedruckt werden. Das Bedrucken erfolgt in einer spezifischen bzw. ersten Bedruckungsgeometrie. Beispielsweise wird dabei die entsprechende Trägeroberfläche nur partiell oder aber auch vollständig bedruckt. Beispielsweise kann ein Randbereich des Trägermaterials beim Bedrucken ausgespart werden. Aber auch andere Bedruckungsgeometrien sind vorstellbar. Ferner kann in diesem Schritt eine Dicke der späteren NTC-Schicht eingestellt werden. Je dicker die NTC-Schicht, desto höher ist deren Widerstand.

Danach wird das System aus keramischem Trägermaterial und NTC-Schicht entkohlt. Anschließend wird das System aus keramischem Trägermaterial und NTC-Schicht gesintert.

In einem anschließenden Schritt erfolgt das Bedrucken der zweiten Trägermaterialseite mit NTC-Paste mittels Siebdruck. Beispielsweise wird in diesem Schritt die Oberseite des Trägermaterials mit NTC-Paste bedruckt. Alternativ dazu kann auch die Unterseite mit NTC-Paste bedruckt werden. Es wird diejenige Außenfläche bzw. Oberfläche des Trägermaterials bedruckt, welche beim einseitigen Bedruckungsvorgang ausgespart wurde.

Das Bedrucken erfolgt in einer spezifischen bzw. zweiten Bedruckungsgeometrie. Die zweite Bedruckungsgeometrie kann der ersten Bedruckungsgeometrie entsprechen. Alternativ dazu können sich die erste und die zweite Bedruckungsgeometrie unterscheiden. Beispielsweise wird die entsprechende Trägeroberfläche nur partiell oder aber auch vollständig bedruckt. Beispielsweise kann ein Randbereich des Trägermaterials beim Bedrucken ausgespart werden. Aber auch andere Bedruckungsgeometrien sind für die zweite Bedruckungsgeometrie vorstellbar. Ferner kann in diesem Schritt eine Dicke der späteren NTC-Schicht eingestellt werden. Je dicker die NTC-Schicht, desto höher ist deren Widerstand. Die Dicken der beiden NTC-Schichten können gleich sein. Alternativ dazu können die NTC-Schichten auch unterschiedliche Dicken aufweisen.

Danach wird das System entkohlt. Anschließend wird das System gesintert. Alternativ dazu können auch beide NTC-Schichten nacheinander gedruckt werden und das System kann anschließend in einem gemeinsamen Vorgang entkohlt und gesintert werden. In diesem Fall wäre die Iteration von Entkohlen und Sintern überflüssig.

In einem weiteren Schritt erfolgt das beidseitige Aufbringen von Ni/Ag-Dünnschichtelektroden mittels Sputtertechnologie auf den gesinterten Sensor. Alternativ dazu können die Elektroden auch aufgedruckt werden (Dickschichtelektroden). Die Elektroden werden gemäß der oben beschriebenen Varianten 1 bis 3 aufgebracht.

In einem weiteren Schritt erfolgt das elektrische Messen der Widerstände der einzelnen Sensorseiten bei Nenntemperatur auf dem noch nicht getrennten Trägermaterial.

Im Anschluss werden die einzelnen NTC-Schichten auf den geforderten Widerstandswert durch Laserabtrag getrimmt.

Es folgt das Vereinzeln der Sensorchips durch Sägen des Trägermaterials zwischen den gedruckten NTC-Bereichen. Durch den Trennprozess wird die endgültige Geometrie hergestellt.

Zuletzt erfolgt die visuelle Inspektion und eine stichprobenartige Kontrollmessung.

Die Beschreibung der hier angegebenen Gegenstände ist nicht auf die einzelnen speziellen Ausführungsformen beschränkt. Vielmehr können die Merkmale der einzelnen Ausführungsformen - soweit technisch sinnvoll - beliebig miteinander kombiniert werden.

### Bezugszeichenliste

- 1: Sensorelement
- 2: Träger
- 3: Elektrode
- 4: NTC-Schicht
- 5: Freibereich
- 6: Freirand
- 7: Aussparung

## Patentansprüche

1. Sensorelement (1) zur Temperaturmessung, aufweisend
- einen keramischen Träger (2),
- wenigstens eine Elektrode (3),
wobei der Träger (2) eine Oberseite und eine Unterseite aufweist, wobei auf der Oberseite und auf der Unterseite des Trägers (2) jeweils eine NTC-Schicht (4) angeordnet ist, und wobei ein Widerstand der jeweiligen NTC-Schicht (4) durch eine Dicke und/oder Geometrie der jeweiligen NTC-Schicht (4) bestimmt wird.

2. Sensorelement (1) nach Anspruch 1,
wobei der Träger (2) mit den NTC-Schichten (4) bedruckt ist, und wobei die NTC-Schichten (4) unterschiedliche Bedruckungsgeometrien aufweisen.

3. Sensorelement (1) nach Anspruch 1 oder 2,
wobei der Träger (2) mit den NTC-Schichten (4) bedruckt ist, und wobei eine Bedruckung der Oberseite und der Unterseite des Trägers (2) mit der jeweiligen NTC-Schicht (4) vollflächig oder partiell ausgeführt ist.

4. Sensorelement (1) nach einem der Ansprüche 1 bis 3,
wobei auf jede der NTC-Schichten (4) wenigstens eine Elektrode (3) aufgebracht ist.

5. Sensorelement (1) nach einem der Ansprüche 1 bis 4,
wobei auf jede der NTC-Schichten (4) wenigstens zwei Elektroden (3) aufgebracht sind, und wobei die Elektroden (3) durch einen Freibereich (5) voneinander getrennt sind.

6. Sensorelement (1) nach einem der Ansprüche 1 bis 4,
wobei
- auf der Oberseite des Trägers (2) eine erste Elektrode (3) aufgebracht ist, wobei auf einem Teilbereich der ersten Elektrode (3) eine NTC-Schicht (4) aufgebracht ist, wobei auf der NTC-Schicht (4) eine zweite Elektrode (3) angeordnet ist und wobei
- auf der Unterseite (3) des Trägers (2) eine weitere NTC-Schicht (4) angeordnet ist, wobei auf die NTC-Schicht (4) zwei Elektroden (3) aufgebracht sind, wobei die Elektroden (3) durch einen Freibereich(5) voneinander getrennt sind.

7. Sensorelement (1) nach Anspruch 6,
wobei die erste Elektrode (3) direkt auf der Oberseite des Trägers (2) aufgebracht ist.

8. Sensorelement (1) nach Anspruch 6 oder 7,
wobei die zweite Elektrode (3) die NTC-Schicht (4) auf der Oberseite des Trägers (2) vollständig bedeckt.

9. Sensorelement (1) nach einem der Ansprüche 1 bis 5,
wobei die jeweilige NTC-Schicht (4) zwei gegenüberliegende Seitenflächen aufweist, und wobei an den Seitenflächen jeweils eine Elektrode (3) angeordnet ist.

10. Sensorelement (1) nach einem der Ansprüche 1 bis 9,
wobei die jeweilige Elektrode (3) wenigstens eine gesputterte Schicht aufweist.

11. Sensorelement (1) nach Anspruch 10,
wobei die gesputterte Schicht direkt auf die jeweilige NTC-Schicht (4) aufgebracht ist.

12. Sensorelement (1) nach einem der Ansprüche 1 bis 9,
wobei die jeweilige Elektrode (3) wenigstens eine aufgedruckte Schicht aufweist.

13. Sensorelement (1) nach Anspruch 11,
wobei die aufgedruckte Schicht direkt auf die jeweilige NTC-Schicht (4) aufgedruckt ist.

14. Sensorelement (1) nach einem der Ansprüche 1 bis 13,
wobei wenigstens eine der NTC-Schichten (4) eine Aussparung (7) aufweist, und wobei die Aussparung (7) dazu vorgesehen ist, den Widerstand der NTC-Schicht (4) einzustellen.

15. Verfahren zur Herstellung eines Sensorelements (1) aufweisend die folgenden Schritte:
- Herstellung von NTC-Pulver zur Ausbildung wenigstens einer NTC-Schicht(4) ;
- Bereitstellung eines keramischen Trägermaterials;
- Bedrucken einer ersten Oberfläche des Trägermaterials mit NTC-Paste in einer ersten Bedruckungsgeometrie;
- Sintern des Systems aus Trägermaterial und NTC-Schicht (4);
- Bedrucken einer zweiten Oberfläche des Trägermaterials mit NTC-Paste in einer zweiten Bedruckungsgeometrie;
- Sintern des Systems;
wobei die jeweilige Oberfläche des Trägermaterials vollflächig oder partiell mit NTC-Paste bedruckt wird.

16. Verfahren nach Anspruch 15,
aufweisend den weiteren Schritt:
- Partieller Abtrag von zumindest einer der NTC-Schichten (4) zur Einstellung eines vorbestimmten Widerstandswerts.

## Claims

1. A sensor element (1) for temperature measurement, comprising
- a ceramic carrier (2),
- at least one electrode (3),
wherein the carrier (2) comprises a top side and an underside,
wherein an NTC layer (4) is arranged on each of the top side and the underside of the carrier (2), and wherein a resistance of the respective NTC layer (4) is determined by a thickness and/or geometry of the respective NTC layer (4).

2. The sensor element (1) according to claim 1,
wherein the carrier (2) is printed with the NTC layers (4), and wherein the NTC layers (4) have different print geometries.

3. The sensor element (1) according to claim 1 or 2,
wherein the carrier (2) is printed with the NTC layers (4), and wherein a printing of the top side and of the underside of the carrier (2) with the respective NTC layer (4) is performed over the whole or part of the surface.

4. The sensor element (1) according to one of claims 1 to 3,
wherein at least one electrode (3) is mounted on each of the NTC layers (4).

5. The sensor element (1) according to one of claims 1 to 4,
wherein at least two electrodes (3) are mounted on each of the NTC layers (4), and wherein the electrodes (3) are separated from each other by a free region (5).

6. The sensor element (1) according to one of claims 1 to 4,
wherein
- a first electrode (3) is mounted on the top side of the carrier (2), wherein an NTC layer (4) is mounted on a subregion of the first electrode (3), wherein a second electrode (3) is arranged on the NTC layer (4), and wherein
- a further NTC layer (4) is arranged on the underside (3) of the carrier (2), wherein two electrodes (3) are mounted on the NTC layer (4), wherein the electrodes (3) are separated from each other by a free region (5).

7. The sensor element (1) according to claim 6,
wherein the first electrode (3) is mounted directly on the top side of the carrier (2).

8. The sensor element (1) according to claim 6 or 7,
wherein the second electrode (3) completely covers the NTC layer (4) on the top side of the carrier (2).

9. The sensor element (1) according to one of claims 1 to 5,
wherein the respective NTC layer (4) has two opposite side surfaces, and wherein an electrode (3) is arranged on each of the side surfaces.

10. The sensor element (1) according to one of claims 1 to 9,
wherein the respective electrode (3) has at least one sputtered layer.

11. The sensor element (1) according to claim 10,
wherein the sputtered layer is mounted directly on the respective NTC layer (4).

12. The sensor element (1) according to one of claims 1 to 9,
wherein the respective electrode (3) has at least one printed layer.

13. The sensor element (1) according to claim 11,
wherein the printed layer is printed directly on the respective NTC layer (4).

14. The sensor element (1) according to one of claims 1 to 13,
wherein at least one of the NTC layers (4) has a cutout (7), and wherein the cutout (7) is provided for setting the resistance of the NTC layer (4).

15. A method of producing a sensor element (1) comprising the following steps:
- producing NTC powder to form at least one NTC layer (4);
- providing a ceramic carrier material;
- printing a first surface of the carrier material with NTC paste in a first print geometry;
- sintering the system made up of carrier material and NTC layer (4);
- printing a second surface of the carrier material with NTC paste in a second print geometry;
- sintering the system;
wherein the respective surface of the carrier material is printed with NTC paste over the whole or part of the surface.

16. The method according to claim 15,
comprising the further step of:
- partial removal of at least one of the NTC layers (4) in order to set a predetermined resistance value.

## Revendications

1. Élément capteur (1) pour la mesure de la température, comportant
- un support (2) en céramique,
- au moins une électrode (3),
le support (2) comportant une face supérieure et une face inférieure, une couche à CTN (4) étant disposée respectivement sur la face supérieure et sur la face inférieure du support (2), et une résistance de la couche à CTN (4) respective étant déterminée par une épaisseur et/ou géométrie de la couche à CTN (4) respective.

2. Élément capteur (1) selon la revendication 1,
dans lequel le support (2) est imprimé avec les couches à CTN (4), et dans lequel les couches à CTN (4) comportent différentes géométries d'impression.

3. Élément capteur (1) selon la revendication 1 ou 2,
dans lequel le support (2) est imprimé avec les couches à CTN (4), et dans lequel une impression de la face supérieure et de la face inférieure du support (2) avec la couche à CTN (4) respective est réalisée sur toute la surface ou partiellement.

4. Élément capteur (1) selon l'une des revendications 1 à 3,
dans lequel au moins une électrode (3) est appliquée sur chacune des couches à CTN (4).

5. Élément capteur (1) selon l'une des revendications 1 à 4,
dans lequel au moins deux électrodes (3) sont appliquées sur chacune des couches à CTN (4), et dans lequel les électrodes (3) sont séparées l'une de l'autre par une zone libre (5).

6. Élément capteur (1) selon l'une des revendications 1 à 4,
dans lequel
- une première électrode (3) est appliquée sur la face supérieure du support (2), une couche à CTN (4) étant appliquée sur une zone partielle de la première électrode (3), une seconde électrode (3) étant disposée sur la couche à CTN (4) et dans lequel
- une autre couche à CTN (4) est disposée sur la face inférieure (3) du support (2), deux électrodes (3) étant appliquées sur la couche à CTN (4), les électrodes (3) étant séparées l'une de l'autre par une zone libre (5).

7. Élément capteur (1) selon la revendication 6,
dans lequel la première électrode (3) est appliquée directement sur la face supérieure du support (2).

8. Élément capteur (1) selon la revendication 6 ou 7,
dans lequel la seconde électrode (3) recouvre entièrement la couche à CTN (4) sur la face supérieure du support (2).

9. Élément capteur (1) selon l'une des revendications 1 à 5,
dans lequel la couche à CTN (4) respective comporte deux surfaces latérales opposées, et dans lequel une électrode (3) est disposée respectivement sur les surfaces latérales.

10. Élément capteur (1) selon l'une des revendications 1 à 9,
dans lequel l'électrode (3) respective comporte au moins une couche déposée par pulvérisation.

11. Élément capteur (1) selon la revendication 10,
dans lequel la couche déposée par pulvérisation est appliquée directement sur la couche à CTN (4) respective.

12. Élément capteur (1) selon l'une des revendications 1 à 9,
dans lequel l'électrode (3) respective comporte au moins une couche imprimée.

13. Élément capteur (1) selon la revendication 11,
dans lequel la couche imprimée est imprimée directement sur la couche à CTN (4) respective.

14. Élément capteur (1) selon l'une des revendications 1 à 13,
dans lequel au moins une des couches à CTN (4) comporte un évidement (7), et dans lequel l'évidement (7) est prévu pour régler la résistance de la couche à CTN (4).

15. Procédé de fabrication d'un élément capteur (1), comportant les étapes suivantes :
- fabrication de poudre à CTN pour réaliser au moins une couche à CTN (4) ;
- préparation d'un matériau support en céramique ;
- impression d'une première surface du matériau support avec de la pâte à CTN selon une première géométrie d'impression ;
- frittage du système constitué du matériau support et de la couche à CTN (4) ;
- impression d'une seconde surface du matériau support avec de la pâte à CTN selon une seconde géométrie d'impression ;
- frittage du système ;
dans lequel la surface respective du matériau support est imprimée entièrement ou partiellement avec de la pâte à CTN.

16. Procédé selon la revendication 15, comprenant l'étape supplémentaire :
- enlèvement partiel d'au moins une des couches à CTN (4) pour régler une valeur de résistance prédéfinie.
